# EUROPEAN PATENT APPLICATION

(11) **EP 2 477 143 A1**
(43) Date of publication of application: **18.07.2012**
(21) Application number: 11305022.3
(22) Date of filing: 10.01.2011
(51) Int. Cl.: G06Q 10/00

(54) **Method for auditing a bag drop in a transportation departure control system**

(71) Applicant: Amadeus S.A.S., 06410 Biot (FR)
(72) Inventor: Hubin, Edouard, 06130, GRASSE (FR); Carle, Vincent, 06370, MOUANS SARTOUX (FR); Huillet, Renaud, 06560, VALBONNE (FR)
(74) Representative: Decobert, Jean-Pascal

(57) **Abstract**

The invention relates to a method and system for auditing a bag drop in a transportation departure control system. The invention enables to check the consistency of information about numbers of dropped bags obtained from a boarding pass and from computerized baggage collection equipment (120). Security warnings are triggered each time a discrepancy is detected.

Application to baggage security control in the travel industry

## Description

### TECHNICAL FIELD

The present invention relates in general to the field of data processing. More specifically it concerns the auditing of baggage drops in transportation computer systems, in particular at check-in stage of a departure control procedure. One non restrictive application is the airline industry.

### BACKGROUND

Traditionally agents were systematically involved in the check-in process, especially when the passenger wished to drop one or more bags. The agents used to control the identity of the passenger, check-in the bags and issue a boarding pass at a check-in desk.

Self service check-in systems have recently been proposed in the perspective of cutting costs as most of the traditional agent work is done by the passenger. It also decreases the time spent at check-in so that passengers can differ their arrival at the airport. Self service installations typically comprise several check-in kiosks with hardware and software means enabling passengers to interface with a computerized check-in system. The user of a kiosk is invited to enter travel information data (e.g. a reservation number or a passenger name or identity card references) for his personal check-in. He can then indicate whether he wishes to drop baggage. In the later case he needs to specify the number of items to be dropped. The user is required to pay excess baggage fees if applicable. For each item, an identification tag is delivered and applied to the bag by the user himself. And a boarding pass is printed. A bag drop apparatus is provided at the same location as the kiosk or a few meters away at a separate bag drop self service desk. Baggage are then dropped by the user on a conveyor belt and are subject to security control steps often including weight measurement and screening of the content of each bag by means of a scanning equipment. Bags passing the control are taken away.

As security issues have to be dealt with, some of today's systems include identification means for checking that the person who dropped the bags is the boarding passenger. By way of example fingerprint scanning means are provided at the self service check-in kiosk as well as at the boarding desk. The fingerprint obtained at the check-in stage is compared to the one detected at the boarding and a warning is triggered if they do not match. Such security techniques rely on expensive and dedicated hardware equipments so that their implementation implies strong modifications of the installation. On top of that, biometrics is not fully reliable.

### SUMMARY

One technical problem the invention proposes to solve is to improve security in connection with the bag drop stages of a check-in and boarding process.

In a more specific manner, the present invention relates to a method for auditing a bag drop in a transportation departure control system comprising the steps of:
i. generation of a boarding pass associated with a travel reservation and comprising baggage data indicative of a first number of bags;
ii. issuance of the boarding pass to user;
iii. determination of a number of dropped bags left in association with the travel reservation at a computerized baggage collection equipment;
iv. at a computerized boarding equipment, read of the baggage data to obtain the first number of bags;
v. retrieval of the number of dropped bags and confrontation of said number of dropped bags against the first number of bags;
vi. triggering of at least one first event if the number of dropped bags is equal to the first number of bags;
vii. triggering of at least one second event differing from the first event if the number of dropped bags differs from the first number of bags.

Based on a comparison between two sets of data -one representing the number of bags as indicated on a boarding pass and one indicated by a baggage collection equipment- the invention offers a secure method to prevent bag drop by intruders without involving strong hardware modifications of the departure control systems. Whereas conventional solutions suggest increasing the passenger identity checks using complex detection technologies such as biometrics, the invention deviates from this solution. The invention is indeed directed towards a processing of bag numbers which would normally not be considered as a security indicator about the identity of the boarding passenger versus the identity of the person who dropped bags.

Further options which can be used cumulatively or alternatively are introduced hereafter:
- the at least one second event includes a warning message generation,
- the at least one first message includes a boarding authorization message generation,
- the steps of generation, issuance, and determination are iterated upon each further bag drop associated with the travel reservation,
- the baggage data are integrated in a carrier section of the boarding pass,
- the boarding pass is a dematerialized boarding pass,
- generation of the boarding pass comprises encoding the first number of bags into an encoded number of bags and wherein the baggage data comprises the encoded number of bags,
- it includes integrating the encoded number of bags into a barcode visible on the boarding pass,
- the barcode is signed with a private key and the read of the baggage data comprises decrypting the signed barcode with a public key associated with the private key,
- it comprises the step of taking a picture of the dropped bags,
- at least one second event includes displaying the picture of each dropped bag,
- at least one of the steps of generation and issuance is performed at a self service check-in computer apparatus,
- it comprises the step of storage of the number of dropped bags in a repository.

The present invention further relates to a transportation departure control system comprising means for executing the method. It preferably comprises at least one self service check-in computer apparatus; a computerized baggage collection equipment; a computerized boarding equipment and a repository for the storage of at least one number of dropped bags.

This system may comprise computer software stored in a non-transitory computer-readable memory medium that is executed by at least one data processor that comprises part of the system.

The present invention also relates to a computer program product storing a computer program comprising instructions adapted to perform the method of the invention.

### BRIEF DESCRIPTION OF THE DRAWINGS

The present invention will now be described in details with reference to the drawings for the purpose of illustrating the preferred embodiment.
Figure 1 illustrates a possible architecture for the invention's system.
Figure 2 shows how a bag dropped can be done.
Figure 3 depicts an exemplary embodiment with a further bag drop.

### DETAILED DESCRIPTION

The invention can be implemented with computer hardware and software means. It can include a server side where processing of data takes place. This server side - which may be comprised of single or plural computer devices- preferably communicates via network resources with at least one interface device users can access.

The detailed description of a preferred embodiment is given hereafter in the case of travel products such as flights operated by Airlines. This is a non limiting example. The wording used herewith does not preclude other applications. For instance, the term "Boarding" here applies to any transportation means.

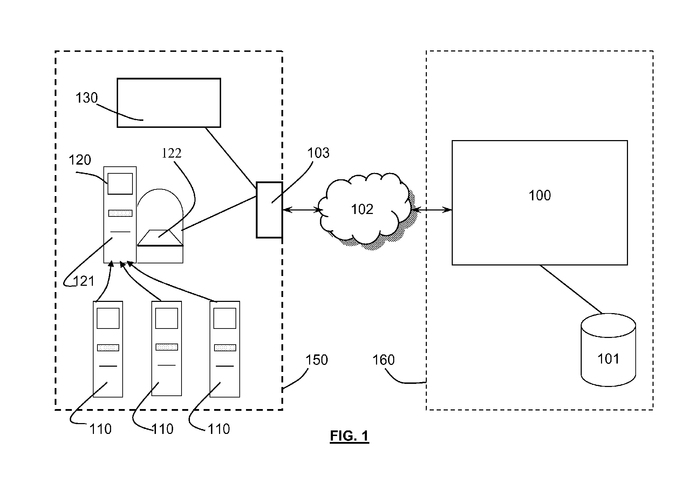

In the Air travel context, the departure control system is at least partially implemented at the airport level. An exemplary embodiment is depicted in figure 1 with an airport-located sides 150 and a server side 160. The server side 160 may comprise server software and hardware components 100 accessing data storage means depicted in the form of a database 101. The server side 160 may be in charge of processing data from plural airport-located side 150 and typically acts as a central component of the whole system.

The server side 160 and the airport-located side 150 communicate via a communication network which may be an Internet based wide area network 102. The airport-located side 150 as of figure 1 includes a gateway 103 for communication management between the two sides 150, 160. However each or some components of the airport-located side may be provided with direct links to the network 102.

Figure 1 further schematically shows several components of the airport-located side 150.

It first includes self-service check-in computer apparatuses 110. They each act as a kiosk for interfacing with one user - usually a passenger. Hardware means can comprise: input means such as keyboard, pointing device, display means such as a screen, document outputting means such as a printer and identification means such as biometric detection device or passport scanning equipment. Software means may include a browser based component for providing a graphical user interface between the user and the rest of the system - the server side 160 in particular - on the basis of a client server architecture. The self-service check-in apparatus 110 enables the passenger to operate his check-in to be allowed to board. This will be described in detail later.

The airport-located side 150 also comprises a computerized baggage collection equipment 120. In one embodiment it is provided integrally with a self-service check-in apparatus 110 and their computer means can be shared. In another embodiment corresponding to figure 1, the computerized baggage collection equipment 120 is located in the vicinity of the self-service check-in apparatus 110 but forms a separate facility. In the later case, it includes a computerized kiosk 121 providing with further interfacing means to be used by the passenger. The kiosk 121 can be designed the same way as the self-service check-in apparatus 110. A collection device 122 forms another portion of the computerized baggage collection equipment 120. It aims at receiving the bags to be left by the passengers. Conventional equipments may be used such as conveyor belts. This parts of the installation will also typically comprise baggage control means such as:
- weight measurement means
- baggage screening devices (e.g. scanning equipment).

One computerized baggage collection equipment 120 may be provided for a plurality of self-service check-in apparatus 110 and a direct communication link might be implemented between them although a centralization of the information flows at the server side 150 is preferred.

Next, figure 1 depicts a computerized boarding equipment 130. It is usually for the agent use and enables the final checks at the boarding stage. It may comprise a security terminal and boarding pass data reading means such as a barcode reader or wireless data transmission means such as a near field communication (also known as NFC) reader. They are used to get the data embedded in the boarding pass which may be:
- a paper-based ticket
- a dematerialized element such as a visual representation displayed on a passenger phone (or other equipment) screen. It can also be a contactless information support to be detected by the NFC reader.

The boarding equipment 130 may be located close to the boarding gate to form the final check stage. However, the invention may comprise additional or alternative boarding equipment situated before the final check such as at the entrance of the boarding zone.

To proceed to check-in, a passenger typically:
- identifies himself to perform his own check-in. He may use reservation number data or passport information data during this stage;
- inputs baggage information such as number of pieces to be dropped and weight;
- pays excess baggage fees if required;
- obtains bag tags to be affixed to these bags to be dropped. Bag tags can be of any conventional types;
- obtains a boarding pass.

All these steps are done at a self-service check-in apparatus.

The passenger can now drop baggage. This can be done at the same apparatus or at a further equipment such as the baggage collection equipment 120 as shown in figure 1. At this level, the passenger is required to identify himself with the boarding pass. He can then inject bags into the collection equipment 122. Security control checks may be executed at this stage as well as a check of the number of bags declared by the passenger compared to the number of bags effectively dropped at the equipment 122.

The invention proposes means ensuring that the person who dropped bags is the same as the person who boards the plane. According to currently known procedure, security issues may occur as there is no strong visibility as to the identity of persons dropping bags. By way of example, the real passenger could proceed to check-in, obtain a boarding pass and drop bags (or not) and another person - such as an intruder- may proceed to a further bag drop by simply knowing the reservation number of the real passenger or any other relevant information. In this case, the real passenger is fully unaware of the fraudulent situation and the departure control system does not trigger any warning message.

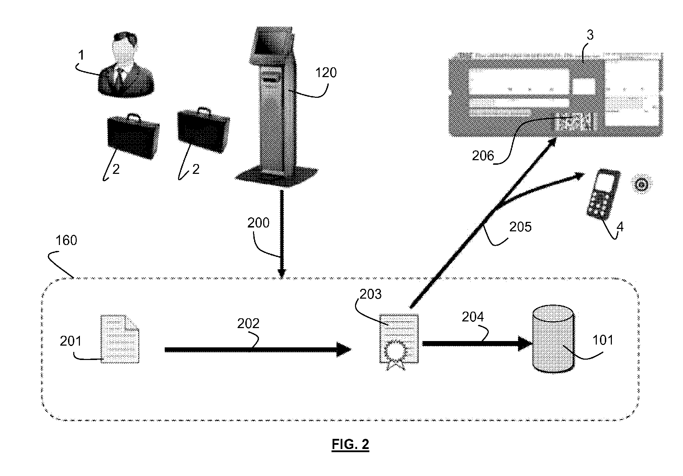

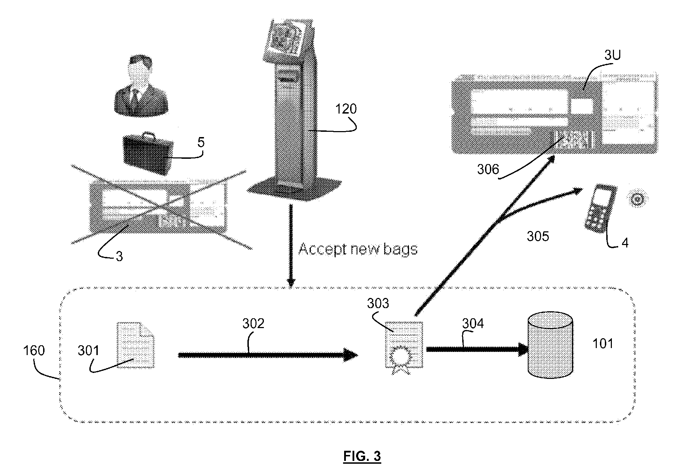

To cope with this kind of problem, the invention comprises specific features that are depicted in figures 2 and 3.

Figure 2 shows a preferred embodiment of steps performed from the check-in stage to the boarding control.

At the self service check-in apparatus 110 and at the baggage collection equipment 120, the passenger decides whether the wishes to drop bags or not.

If the passenger has no bag to drop, then the boarding pass 3 is issued by the check-in device 110 and no further steps are needed from the passenger's standpoint.

If the passenger has bags to drop, he declares the number of bags 2 to be dropped. If no problem is encountered (over baggage fees for example), the bags 2 are accepted at 200 and the number of bags 201 is used as an information for emitting the boarding pass 3.

As also shown in figure 2, the number of bags 201 signed by the system at 202 to generate an encoded number of bags 203. This step can involve the use of asymmetric encryption mechanism. More precisely, the number of bags 201 is signed with a private key and later decrypted with a public key associated to the private key. Other signing or coding methods can be implemented.

The encoded number of bags is preferably stored at 204 in a repository such as a memory space of the database 101 situated at the server side 160.

These data may be stored along with other passenger or reservation data. This may include at least one of: bag picture data, passenger picture data and/or biometric data, passenger name record.

Even in case of passengers traveling together, each bag in the pool will be associated to one single passenger to maintain a one to one match between one bag and one passenger.

The encoded number of bags 203 is incorporated in the boarding pass 3 at 205. The picture depicted in figure 2 shows a paper ticket for the boarding pass 3. The encoded number of bags 203 is there represented within a barcode. One can use the barcode portion usually dedicated to the airline. The invention can also be implemented with dematerialized boarding passes such as the ones using NFC technology; electronic device 4 - e.g. a smart phone or other handheld equipments - may be used according to this embodiment.

Optionally a picture of each bag is taken when the bag is injected in the equipment 120 and is stored, preferably along with the passenger name record.

Turning now to figure 3, a further bag dropping is done by a person differing from the real passenger. Assuming he knows some information about the travel reservation he requests a further bag drop at the self-service check-in apparatus 110 and the system accepts the new bag(s) 2.

The user is invited to discard the previous boarding pass 3. The system now processes a new number of bags 301 the same way it did in the situation of figure 2. Accordingly new bags are added to the previous number of bags 201. The number of bags 301 is encoded at 302 to get an encoded number of bags 303 to be stored at 304 in the database 101. A new boarding pass 3 is issued at 305 and comprises the encoded number of bags 303 within the airline barcode 306.

The repository now stores a new number of bags 301 which differs from the number of bags dropped by the real passenger. However, the real passenger still holds the first boarding pass 3 with the original number of bags 201.

At the boarding equipment 130, an agent reads the information of the boarding pass 3 with the original number of bags 201. The system then compares this number 201 with the stored number of dropped bags 301. As a discrepancy is detected, an event is triggered such as a request for further investigations. During this stage, a picture of the dropped bag(s) may be displayed to let the passenger checks the bags. He may detect a wrong bag and help the security agent to solve the problem.

If no discrepancy is detected, it means that no fraudulent bag dropping occurred and the passenger is authorized to board unless another problem is detected.

The invention works as well with a dematerialized boarding pass and/or check-in by Internet. If an electronic boarding pass 3 has been set to a passenger's device (e.g. a mobile phone) through a communication service (such as SMS which stands for short message service), this boarding pass is flagged as not valid anymore in case of further bag drop. Any attempt to access it will result in an error message telling the passenger to use the new boarding pass or to contact an agent. In order to achieve this, the system may send the boarding pass as an universal resource locator link (URL) in a SMS. The URL is stored in a repository such as the database 101 and associated to the passenger data with a status. When the passenger tries to access it, the status of the URL is checked and if the boarding pass cannot be displayed due to the reasons explained above, an error message is displayed instead. Optionally, an SMS can be sent to the passenger to advise him the previously generated electronic Boarding Pass can not be used anymore.

According to another embodiment of the invention, the system includes a further boarding pass checking device at a security checkpoint located at the entrance of the boarding area in addition to or in substitution for a boarding equipment located close to the boarding gate. Boarding pass reading means are there used to identify a passenger entering the boarding area. In case of further bag dropping request, this information is retrieved and a problem is detected. This triggers a warning or an event shopping or preventing the further bag drop.

The invention works even if the real passenger had dropped no bag. And it does not preclude a further bag drop by the real passenger: the number of bag information he would get on the new boarding pass would still be consistent with the number of dropped bags associated with his reservation. In this context pictures of the bags he previously dropped may also be shown at the screen of the self-service check-in apparatus for an additional control.

Although illustrative embodiments of the present invention have been described in detail with reference to the accompanying drawings, it is to be understood that the invention is not limited to those precise embodiments and that changes and modifications may be effected therein by those in the art without departing from the scope and spirit of the invention.

## Claims

1. Method for auditing a bag drop in a transportation departure control system comprising the steps of:
i. generation of a boarding pass (3) associated with a travel reservation and comprising baggage data indicative of a first number of bags;
ii. issuance of the boarding pass (3) to user;
iii. determination of a number of dropped bags left in association with the travel reservation at a computerized baggage collection equipment (120);
iv. at a computerized boarding equipment (130), read of the baggage data to obtain the first number of bags;
v. retrieval of the number of dropped bags and confrontation of said number of dropped bags against the first number of bags;
vi. triggering of at least one first event if the number of dropped bags is equal to the first number of bags;
vii. triggering of at least one second event differing from the first event if the number of dropped bags differs from the first number of bags.

2. Method according to the preceding claim wherein the at least one second event includes a warning message generation.

3. Method according to any of the preceding claims wherein the at least one first message includes a boarding authorization message generation.

4. Method according to any of the preceding claims wherein the steps of generation, issuance, and determination are iterated upon each further bag drop associated with the travel reservation.

5. Method according to any of the preceding claims wherein the baggage data are integrated in a carrier section of the boarding pass (3).

6. Method of any of the preceding claims wherein the boarding pass (3) is a dematerialized boarding pass.

7. Method according to any of the preceding claims wherein generation of the boarding pass (3) comprises encoding the first number of bags into an encoded number of bags and wherein the baggage data comprises the encoded number of bags.

8. Method according to the previous claim comprising integrating the encoded number of bags into a barcode (206, 306) visible on the boarding pass (3).

9. Method according to the preceding claim wherein the barcode (206, 306) is signed with a private key and wherein the read of the baggage data comprises decrypting the signed barcode with a public key associated with the private key.

10. Method according to any of the preceding claims comprising the step of taking a picture of the dropped bags (2).

11. Method according to the preceding claim wherein the at least one second event includes displaying the picture of each dropped bag (2).

12. Method according to any of the preceding claims wherein at least one of the steps of generation and issuance is performed at a self service check-in computer apparatus (110).

13. Method according to any of the preceding claims comprising the step of storage of the number of dropped bags in a repository (101).

14. Transportation departure control system comprising:
i. means for generating a boarding pass (3) associated with a travel reservation and comprising baggage data indicative of a first number of bags;
ii. means for issuing a boarding pass (3) to a user;
iii. a computerized baggage collection equipment with means for determining a number of dropped bags left in association with the travel reservation;
iv. a computerized boarding equipment (130) with means for reading the baggage data to obtain the first number of bags;
v. means for retrieving the number of bags dropped and means for confronting the number of dropped bags against the first number of bags;
vi. means for triggering at least one first event if the number of dropped bags is equal to the first number of bags;
vii.means for triggering at least one second event differing from the first event if the number of dropped bags differs from the first number of bags.

15. Transportation departure control system according to the preceding claim, comprising means for executing the method of any of the claims 1 through 13.

16. Transportation departure control system according to the preceding claim comprising at least one self service check-in computer apparatus (110) comprising the means for generating and the means for issuing.

17. Transportation departure control system comprising a repository (101) with means for storing the number of dropped bags.

18. Transportation departure control system as in any of the four preceding claims, comprising computer software stored in a non-transitory computer-readable memory medium that is executed by at least one data processor that comprises part of the system.

19. Computer program product stored in a non-transitory computer-readable memory medium and comprising instructions for executing the method of any of claims 1 to 13.
